# EUROPEAN PATENT APPLICATION

(11) **EP 1 396 610 A2**
(43) Date of publication of application: **10.03.2004**
(21) Application number: 03019153.0
(22) Date of filing: 25.08.2003
(51) Int. Cl.: F01D 25/16, F01D 25/18, F16C 35/02

(54) **Roller bearing with oil ring lubrication**

(30) Priority: 09.09.2002 US 237421
(71) Applicant: Reliance Electric Technologies, LLC, Mayfield Heights, Ohio 44124 (US)
(72) Inventor: DeWachter, Ryan, N., Simpsonville, South Carolina 29681 (US); Nisley, Donald, L., Greenville, South Carolina 29607 (US); Diaz, Alexander, R., Greer, South Carolina 29650 (US)
(74) Representative: Lippert, Marianne

(57) **Abstract**

The invention features a bearing housing that employs fewer structural components than traditionally used. In one embodiment, endplates are integrated into the upper and lower housing structures such that essentially only two prefabricated pieces are required to form the bearing housing. Additionally, the integrated endplates house seal assemblies that prevent the ingress and egress of contaminants between the shaft and the bearing housing.

## Description

### BACKGROUND OF THE INVENTION

The present invention relates generally to bearing housings and more particularly a roller bearing housing with integrated end plates and split construction to facilitate installation and servicing.

Roller bearings are common devices employed to allow for rotation of various elements. The bearings reduce unwanted friction by providing a smooth inner and outer surface against which the rollers travel. A shaft can be inserted through the central opening of the bearing thereby allowing securing of the shaft as it rotates. The shaft may then be engaged to drive various machines, such as fans, turbines or a wide range of other machines. The rotation of the shaft, in conjunction with the bearing, typically subjects the bearing to radial and thrust loads. In order to support the roller bearing against subjected loads that induce unwarranted movement, the roller bearing is set inside a housing. Additionally, the housing may protect the bearing from contaminants and may also provide the roller bearing with a source of lubrication.

Traditionally, housings incorporating oil rings for lubrication are constructed from a four-piece assembly consisting of an upper piece, a lower piece, and two endplates. After the upper and lower pieces are fastened together, the two independent endplates are subsequently secured to the partially assembled housing. The upper and lower pieces, as assembled, surround the roller bearing and secure the roller bearing in place while the independent endplates complete the enclosure of the roller bearing and provide a passthrough for the shaft. The ingress and egress of materials between the housing and shaft passthrough is resisted by seal assemblies located within the independent endplates.

The traditional use of four distinct pieces increases the cost of fabrication and also increases the number of joints at which leakage may occur. A need exists for a bearing housing incorporating an oil ring lubrication arrangement, but that uses fewer pieces and decreases the number of joints at which potential leakage may occur.

### SUMMARY OF THE INVENTION

The invention features a bearing housing that employs fewer structural components than traditionally used. In one embodiment, the endplates are integrated into the upper and lower housing structures such that essentially only two prefabricated pieces are required to form the bearing housing. Additionally, the integrated endplates house seal assemblies that prevent the ingress and egress of contaminants between the shaft and the bearing housing.

### BRIEF DESCRIPTION OF THE DRAWINGS

The foregoing and other advantages and features of the invention will become apparent upon reading the following detailed description and upon reference to the drawings in which:
Figure 1 is a perspective view of an assembled bearing housing in accordance with aspects of the present technique having a shaft incorporated therethrough;
Figure 2 is an exploded perspective view of the bearing housing illustrated in Figure 1;
Figure 3 is a cross-sectional view along line 3-3 of the assembled bearing housing as illustrated in Figure 1;
Figure 4 is a cross-sectional view along line 4-4 of the bearing housing shown in Figure 3, wherein the view plane cuts in front of the roller bearing as to show the integrated end plates of the upper and lower housing; and
Figure 5 is a cross-sectional view along line 5-5 of the bearing housing as illustrated in Figure 3, wherein the view plane passes behind the roller bearing as to show the roller bearing and its support structures.

### DETAILED DESCRIPTION OF SPECIFIC EMBODIMENTS

For purposes of convenience, the present invention will be described with respect to a two-piece roller bearing housing. However, it will be appreciated that this invention is equally applicable to various other types of bearings as well. Moreover, the bearing housing need not be limited to two-piece housings.

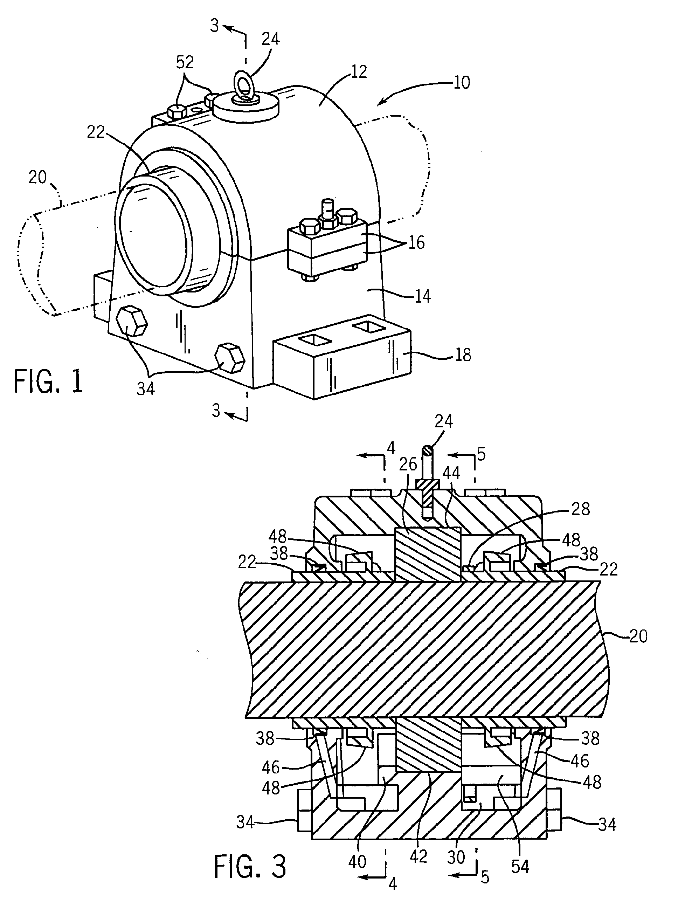

Figure 1 is a perspective view of an assembled bearing housing 10. Effectively, the bearing housing 10 is constructed by securely fastening the upper housing 12 with the lower housing 14. The bearing housing 10 has a set of securing flanges 16 located on the upper side of the lower housing 14 and the lower side of the upper housing 12 that are aligned so as to allow for securely bolting the two housing structures together. Figure 1 also depicts a pair of mounting flanges 18 located on the lower sides of the lower housing 14. The mounting flanges 18 allow for the entire bearing housing 10 to be securely fastened to a base or other mounting assembly (not shown). As assembled, the shaft 20 is protected against excessive wear during rotation by a set of sleeve assemblies 22 located at the entry and exit portals of the bearing housing 10. For purposes of maintenance or transportation, a lifting hook 24 provides a secure connection to the bearing housing 10. As illustrated by the exemplary embodiment, the entire bearing housing 10 may, effectively, comprise of two separate housing structures such that only one joint of concern exists between the two.

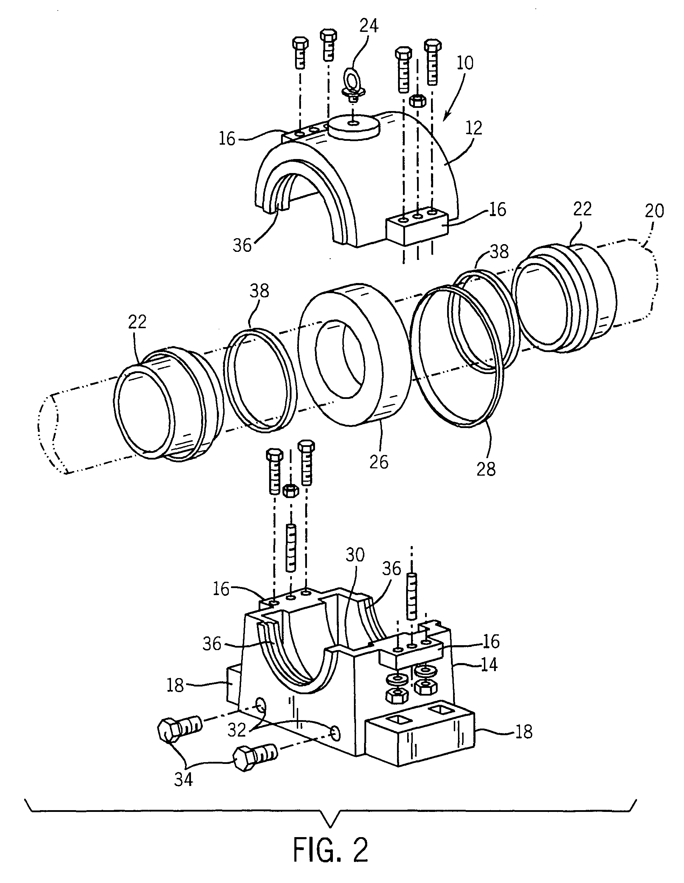

Figure 2 shows the structure of Figure 1 in exploded perspective and further illustrates some of the internal components of the bearing housing 10. The exploded view permits depiction of a roller bearing 26. The shaft 20, that is supported by the bearing housing 10, passes securely through the open center of the roller bearing 26. The free moving nature of the inner race of the roller bearing 26 allows for secured rotation of the shaft 20 along its given axis of rotation. The sleeves 22, located on opposite ends of the roller bearing 26, protect the shaft 20 from wear induced by the rotation of the shaft against the bearing housing 10 or seals as described below. Along the shaft 20 and located between the roller bearing 26 and the appropriate sleeve 22 rides an oil ring 28. The oil ring 28 accesses lubricating fluid from a sump 30 formed in a lower region of lower housing 14 to lubricate the roller bearing 26.

In the exemplary embodiment illustrated, the integration of the essential elements of the bearing housing into two distinct components limits the ingress of contaminants that could harmfully affect the operation of the roller bearing. Moreover, the exemplary two-piece bearing housing limits leakage of oil from joints between the upper and lower housing portions. Additionally and for purposes of maintenance, for example, the sump 30 may be drained of oil by a set of oil drains 32. Accessibility to the oil drains 32 is provided by corresponding oil drain plugs 34. It should be noted that the use of the bearing housing 10 as providing an oil reservoir or sump is presently preferred, but other particular designs not incorporating such features may also be enabled by the present technique.

The exploded view of Figure 2 also permits depiction of a set of seal tracks or groves 36. As shown, the seal tracks 36 are semicircular recesses formed within the integrated end plates of the upper housing 12 and the lower housing 14, respectively. The curvature of each seal track 36 accommodates a seal assembly 38, which is preferably disposed therein. Each seal assembly 38 may be of any suitable type. However, for exemplary purposes a compound seal having face-rubbing portion and a labyrinth seal is presented. Upon the securing of the upper housing 12 to the lower housing 14, each seal track 36 becomes a continuous pathway housing the respective seal assembly and circumscribing the shaft 20. In the instant embodiment, each seal assembly 22 rides against a respective sleeve 22 so as to isolate the interior of the bearing housing 10 from outside contaminants, and to maintain lubricant within the housing. It should be noted that the seal assemblies 38 need not necessarily be disposed of within the seal tracks 36, and that the aforementioned seal tracks 36 are intended to constitute an exemplary embodiment. Alternatively, the seal tracks 36 may be removed or altered and a thin seal assembly 38 may be employed.

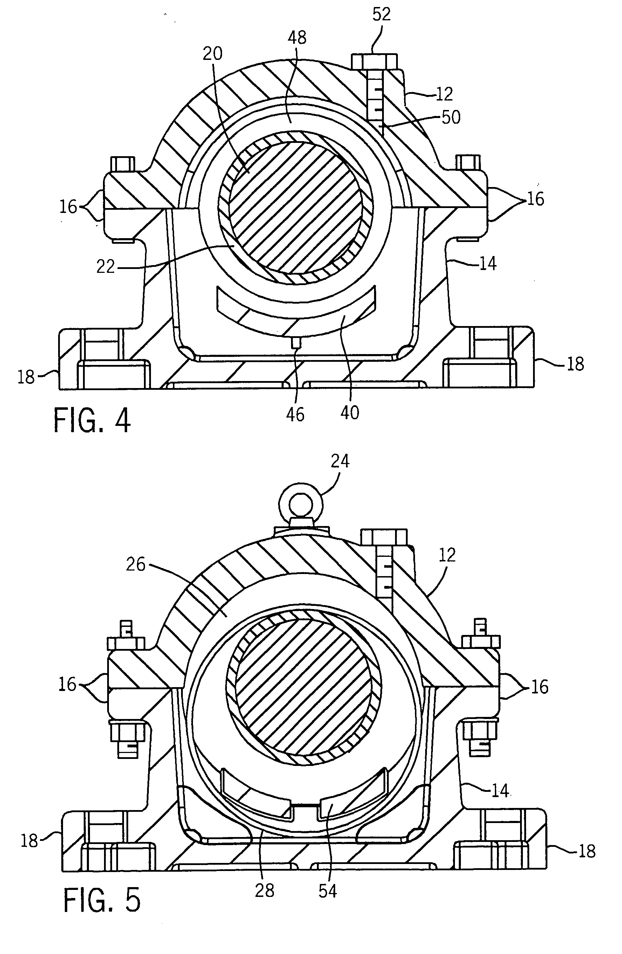

Figure 3 is a cross-sectional view of the assembly of Figure 1 along line 3-3. This view provides an illustration of the bearing housing assembly 10 along a plane parallel to the axis of rotation of the shaft 20. As depicted, the roller bearing 26 rests securely on bearing support 40. The bearing support 40 is structurally integrated into the bottom portion of lower housing 14. The radius of curvature of the bearing support 40 essentially matches that of the roller bearing 26. Additionally, within the lower bearing support 40 a lower bearing channel 42 is formed. It is within the lower bearing channel 42 that the roller bearing 26 rests. The depth of the lower bearing channel 42 is such as to prevent lateral movement of the roller bearing 26 when loaded. The width of the lower bearing channel 40 is maintained within close tolerance to the width of the roller bearing 26 to prevent unnecessary lateral movement of the roller bearing 26. Correspondingly, an upper bearing channel 44 is formed within the top portion of the upper housing 12. The curvature of the upper bearing channel 44 also generally matches that of the roller bearing 26. Similarly to the lower bearing channel 40, the width and depth tolerances of the upper bearing channel 44 are maintained with respect to the dimensions of the roller bearing 26 to prevent lateral movement thereof. The tolerances between the bearing 26 and the channels 42 and 44 may create a friction fit and so as to prevent the rotation outer race of bearing 26. As assembled, the upper bearing channel 44 in conjunction with the lower bearing channel 42 allow the roller bearing 26 to support radial loads as applied by the shaft 20. Additionally, the bearing support 40 also supports thrust loads of the shaft 20 upon the roller bearing 26.

By supporting loading of the roller bearing 26, the bearing support 40 relieves the seal assemblies 38 located in the lower housing 14 from any such loading by the shaft 20. Accordingly, the wear upon the seal assemblies 38 is reduced. It should also be noted that in the illustrated embodiment the seal assemblies 38 located within the lower housing 14 are in fluid communication with the sump 30 via a set of seal drains 46. The seal drains 46 direct excess lubricating fluid away from the seal assemblies 38 and return the lubricating fluid back to the sump 30. The seal drains 46 reduce the likelihood of excess lubricating fluid escaping from the bearing housing 10 at the seal assemblies 38. As stated above, an exemplary seal type for each seal assembly 38 includes face rubbing seals integral with labyrinth seals.

As shown in the illustrated embodiment, the seal assemblies 38 interact with a pair of sleeves 22 that are disposed on both sides of the roller bearing 26. The sleeves 22 may be friction fitted onto the shaft 20. If desired, however, other measures such as a set screws, for example, may be employed to secure the sleeves 22 to the shaft 20. The sleeves 22 circumscribe the shaft 20 and extend from the roller bearing 26 to a point slightly beyond the integrated end plates of the upper housing 12 and lower housing 14. The sleeves 22 may have integrated deflector rings 48 located at a position on the respective sleeve 22 such that the deflectors 48 are disposed between the roller bearing 26 and the integrated end plates of the upper housing 12 and lower housing 14. The deflector 48 is provided to prevent contaminants that enter the bearing housing 2 from reaching and affecting the rotation of the roller bearing 26.

Figure 4 is a cross-sectional view of the assembled bearing housing 10 along line 4-4 as shown in Figure 3. This view illustrates the interior of the bearing housing 10 along a plane perpendicular to the axis of rotation of the shaft 20 and in front of the roller bearing 26. As shown, the upper housing 12 provides an oil inlet passage 50 through which a lubricating fluid may be inserted into the interior of the bearing housing 10. The inlet passage 50 is then subsequently sealed through the use of an inlet plug 52. Moreover, the mounting flanges 18, as shown, are provided with passages through which bolts could secure the bearing housing 10 to a support surface (not shown). Figure 4 also illustrates the contour and shape of the bearing support 40.

Figure 5 is a cross-sectional view of the bearing housing 10 as illustrated in Figure 3 along line 5-5. Figure 5 illustrates the bearing housing 10 along a plane perpendicular to the axis of rotation of shaft 20 and located behind the roller bearing 26. In this view, the oil ring 28 can be seen. The oil ring 28, in the illustrated embodiment, may be a steel ring that loosely circumscribes the shaft 20 and one of the sleeves 22 as well as a set of oil ring supports 54. The oil ring supports 54 are integrated into the bearing housing support 40. As the shaft 20 and the sleeve 22 rotate, the friction between the sleeve 22 and the oil ring 28 induces rotation of the oil ring 28. During each revolution of the oil ring 28, it draws lubricating fluid from the sump 30 and subsequently carries the lubricating fluid to a contact point with the sleeve 22 and shaft 20. The oil ring 28 then deposits the lubricating fluid such that free-rotation of the roller bearing 26 is assisted as is cooling and cleaning of the bearing assembly.

While the invention may be susceptible to various modifications and alternative forms, specific embodiments have been shown in the drawings and have been described in detail herein by way of example only. However, it should be understood that the invention is not intended to be limited to the particular forms disclosed. Rather, the invention is to cover all modifications, equivalents, and alternatives falling within the spirit and scope of the invention as defined by the following appended claims.

### In summary:

The invention features a bearing housing that employs fewer structural components than traditionally used. In one embodiment, endplates are integrated into the upper and lower housing structures such that essentially only two prefabricated pieces are required to form the bearing housing. Additionally, the integrated endplates house seal assemblies that prevent the ingress and egress of contaminants between the shaft and the bearing housing.

## Claims

1. A bearing assembly for supporting a machine element in rotation, the assembly comprising:
a bearing housing including:
a first housing portion having a first seal assembly receiving surface,
a second housing portion having a second seal assembly receiving surface, and forming a sump for lubricant, and
seal assemblies'disposed at least partially in contact with the receiving surfaces;
a bearing set sealed within the housing by engagement of the first housing portion with the second housing portion; and
a lubricating ring disposed within the housing to draw lubricant from the sump during operation of the assembly.

2. The bearing assembly of claim 1, wherein the engaged first and second housing portions enclose a roller bearing.

3. The bearing assembly of claim 1, wherein the first and second seal assemblies comprise labyrinth seals.

4. The bearing assembly of claim 2, wherein the roller bearing is lubricated via the lubricating ring.

5. The bearing assembly of claim 1, wherein the receiving surfaces are channels.

6. The bearing assembly of claim 5, wherein the receiving surfaces of the first and second housing are continuous.

7. The bearing assembly of claim 1, wherein the bearing set is configured to support a rotating shaft.

8. The bearing assembly of claim 1, wherein the assembly further comprises sleeves configured to be fit on a rotating element and to contact and form a seal with the seal assemblies.

9. The bearing assembly of claim 1, wherein at least the first housing portion comprises a groove such that abutment of the bearing set against sides of the groove resists lateral movement of the bearing set.

10. The bearing assembly of claim 9, wherein the second housing portion comprises a bearing support member against which the bearing set rests.

11. The bearing assembly of claim 10, wherein the bearing support member resists lateral movement of the roller bearing set.

12. A roller bearing assembly for supporting a machine element in rotation, the assembly comprising:
a bearing housing including:
a first housing portion having a first seal assembly receiving surface, and
a second housing portion having a second seal assembly receiving surface;
seal assemblies disposed at least partially in contact with the receiving surfaces; and
a roller bearing set sealed within the housing by engagement of the first housing portion with the second housing portion.

13. The roller bearing assembly of claim 12, wherein the first and second seal assemblies comprise labyrinth seals.

14. The roller bearing assembly of claim 12, wherein the roller bearing set is configured to support a rotating shaft.

15. The roller bearing assembly of claim 12, wherein the assembly further comprises sleeves configured to be fit on a rotating element and to contact and form a seal with the seal assemblies.

16. The roller bearing assembly of claim 12, wherein at least the first housing portion comprises a groove such that abutment of the roller bearing set against sides of the groove resists lateral movement of the roller bearing set.

17. The roller bearing assembly of claim 16, wherein the second housing portion comprises a roller bearing support member against which the roller bearing set rests.

18. The roller bearing assembly of claim 17, wherein the roller bearing support member resists lateral movement of the roller bearing set.

19. A bearing assembly, comprising:
a rotating member;
a housing having first and second housing portions, a first integrated seal such that the first seal sealingly engages the rotating member, and a second integrated seal such that the second seal sealingly engages the rotating member; and
a roller bearing, such that engagement of the first housing portion with the second housing portion encloses the roller bearing and seals the rotating member with respect to the housing.

20. The bearing assembly of claim 19, wherein the first and second seals comprise labyrinth seals.

21. The bearing assembly of claim 19, wherein the roller bearing is lubricated via an oil ring.

22. The bearing assembly of claim 21, wherein the oil ring accesses oil from a sump disposed within the second housing portion.

23. The bearing assembly of claim 19, wherein the rotating member comprises a shaft.

24. The bearing assembly of claim 23, wherein the shaft comprises at least one friction fit sleeve that protects that shaft from wear due to rotation during operation.

25. The bearing assembly of claim 22, wherein the second housing portion includes a plurality of drains that provide a path for oil to travel from the seals to the sump.

26. A method of enclosing a bearing in a bearing housing, having a rotating member therethrough, comprising:
mating a first housing having a first seal assembly disposed partially within the first housing with a second housing having a second seals assembly disposed partially within the second housing such that the mated first and second housings seal the rotating member with respect to the bearing housing.

27. The method of claim 26, further comprising the step of accessing oil via an oil ring from a sump formed within the second housing.

28. The method of claim 27, further comprising the step of lubricating a roller bearing via the oil ring.
